# EUROPEAN PATENT SPECIFICATION

(11) **EP 4 320 393 B1**
(45) Date of publication and mention of the grant of the patent: **05.03.2025**
(21) Application number: 22717285.5
(22) Date of filing: 07.04.2022
(51) Int. Cl.: F24F 3/14

(54) **A SYSTEM AND METHOD FOR DEHUMIDIFYING AIR**
SYSTEM UND VERFAHREN ZUR ENTFEUCHTUNG VON LUFT
SYSTÈME ET PROCÉDÉ DE DÉSHUMIDIFICATION DE L'AIR

(30) Priority: 08.04.2021 NL 2027945
(43) Date of publication of application: 14.02.2024
(73) Proprietor: Solutherm B.V., 5345 JX Oss (NL)
(72) Inventor: JELLEMA, Pieter, 5345 JX Oss (NL); NIJDAM, Jelle Luutzen, 5345 JX Oss (NL)
(74) Representative: V.O.
(86) International application number: PCT/NL2022/050195
(87) International publication number: WO 2022/216155

(56) References cited:
- WO-A1-2013/172789
- WO-A1-2019/089971
- WO-A2-2011/150081
- WO-A2-99/32841
- CN-A- 108 954 625

## Description

### FIELD OF THE INVENTION

The present invention relates to a system and method for the dehumidification of airstreams such as for processes, production areas or residential buildings. In particular, the invention relates to an air dehumidification system and method comprising the chemical absorption of water vapour from the air by a liquid absorbent and the removal of the moisture from this absorbent. More in particular, the invention relates to a system and method for demoisturising a liquid absorbent by evaporation of the moisture.

### BACKGROUND TO THE INVENTION

Air dehumidification systems are generally used for processes, process areas or residential buildings which require the supply of dry air with a lower or more stable humidity ratio than available from outside. Humidity control is indispensable in many locations, such as for the wellbeing of humans in offices and commercial buildings, for certain industrial drying processes, in process areas where condensation and mold growth should be eliminated and to avoid the formation of snow at low temperature freezing processes.

Desiccant dehumidification processes utilize a hygroscopic desiccant material to absorb moisture or water vapour from air, thereby lowering the humidity level in the air to the desired value. Desiccant materials can be a solid (e.g., silica gel, molecular sieve) or a liquid (concentrated salt solutions such as lithium chloride, calcium chloride, or lithium bromide). The energy required for desiccant dehumidification processes is less than for conventional vapour compression systems.

Dehumidification of air by a liquid desiccant is known to be carried out in a packed column, with liquid sprayers above the column and the entrance of air at the bottom. Solid desiccants are usually applied as a surface layer on porous materials through which the air stream is directed. The use of solid desiccants can have the disadvantage that it is costly for larger air flow rates. Another disadvantage of using solid desiccants can be that high temperatures are required for desiccant regeneration. Lastly, a disadvantage can be that known conditioners using solid desiccants are generally not suitable for extra functionalities being incorporated in the conditioner, such as air cooling or scrubbing, to mitigate air borne microorganisms.

WO99/32841 concerns a liquid desiccant dehumidifier and a liquid desiccant air conditioner including an absorption air conditioner and a liquid desiccant dehumidifier. The dehumidifier includes a liquid desiccant absorber for absorbing moisture contained in ambient air entering the dehumidifier and passing through the desiccant absorber. WO99/32841 provides a liquid desiccant air conditioner which does not require a compressor.

WO2019/089971 discloses methods and control systems for operating a liquid desiccant air-conditioning system to efficiently maintain a target temperature and humidity level in a space, the system discharging relatively hot moist air during operation.

CN108954625 discloses a heat pump in a dehumidification air conditioner system, wherein a compressor is connected with a first condenser, a second condenser and an evaporator through refrigerant pipelines. The first condenser and the second condenser are also connected with the evaporator (through refrigerant pipelines). The condensers are arranged for condensing refrigerant. The evaporator is arranged for chilling liquid water, conducted via a chilled water circuit. During operation, dilute solution of the regenerator is pressurised by a solution pump and is heated by a first condenser, and then sprayed in a packing plate of a regenerator. The regenerator and dehumidifier are arranged in different locations, wherein moist air, leaving the regenerator, is discharged outdoors.

### SUMMARY OF THE INVENTION

It is an object of the invention to provide a system for dehumidification of air, and/or a method for dehumidifying air, that obviates, or at least diminishes the disadvantages mentioned above. More in general, it is an object to provide an improved air dehumidification system and/or method for dehumidifying air. Herein dehumidifying can also be defined as demoisturising, and vice versa.

Thereto, according to the invention an air dehumidification system according to claim 1 is provided. The air dehumidification system comprises a conditioner configured for absorbing moisture from air into a liquid desiccant. The conditioner can e.g. include a packed column. The liquid desiccant can comprise concentrated salt solutions such as lithium chloride, calcium chloride, and/or lithium bromide. The air dehumidification system further comprises a desiccant dryer configured for evaporating the absorbed moisture from the liquid desiccant to become evaporated moisture. The desiccant dryer can include a shell and at least one heat transfer tube, or a packed column. The air dehumidification system comprises a condenser configured for condensing the evaporated moisture (in particular condensing evaporated water into liquid water). The condenser includes at least one heat transfer tube. The air dehumidification system comprises a heat transfer medium flow circuit arranged such that heat removed from the evaporated moisture during condensation thereof in the condenser is absorbed by the heat transfer medium, and such that said absorbed heat is used for the evaporation of the absorbed moisture from the liquid desiccant. The temperatures, volumes and/or pressures in the air dehumidification system can be chosen such that the absorbed moisture evaporates from the liquid desiccant in the desiccant dryer, and/or such that the evaporated moisture condensates in the condenser. The temperatures, volumes and/or pressures in the heat transfer medium flow circuit can be chosen such that the heat transfer medium condenses in the desiccant dryer or in a heat exchanger, e.g. associated with the desiccant dryer, and/or such that the heat transfer medium evaporates in the condenser. Heat can be transferred to and from the heat transfer medium using convection, conduction and/or radiation. The air dehumidification system can be more energy efficient due to its use of heat from condensation during evaporation (wherein the system in particular does not discharge moist air during operation, but -in particular liquid water).

The condenser comprises at least one cooling tube forming part of the heat transfer medium flow circuit and having a first surface for condensation of the evaporated moisture thereon. The first surface can be an outer surface of the cooling tube. The cooling tube can in use be internally cooled by the heat transfer medium.

The heat transfer medium flow circuit comprises a compressor downstream of the at least one cooling tube. The compressor can be positioned upstream of the desiccant dryer and/or upstream of a heat exchanger. The compressor is arranged to increase a pressure of the heat transfer medium.

Optionally, the condenser is arranged for discharging condensed moisture in liquid form. The condensed moisture can comprise, or be, water.

Optionally, the pressure in the desiccant dryer is, in use, substantially equal to the pressure in the condenser. In use, the pressure at which moisture is removed from the desiccant in the desiccant dryer can be substantially equal to the pressure at which this moisture condenses in the condenser

Optionally, the pressure in the desiccant dryer differs, in use, from the pressure in the condenser by less than 50 Pascal. The pressure of the moisture and the liquid desiccant in the desiccant dryer can e.g. differ, in use, from the pressure of the moisture in the condenser by 10-20 Pascal. The pressure at which moisture is removed from the desiccant in the desiccant dryer differs from the pressure at which this moisture condenses in the condenser by less than 50 Pascal, such as 10-20 Pascal.

Optionally, the pressure in the desiccant dryer and/or the pressure in the condenser is subatmospheric. The pressure of the moisture and/or the liquid desiccant can in, use, be subatmospheric.

Optionally, the system is arranged such that the mechanical power of the compressor contributes to the heat used for evaporation. The energy imparted by the compressor to the heat transfer medium can be transferred to the desiccant dryer e.g. by condensation of the heat transfer medium in the desiccant dryer or in a heat exchanger associated with the desiccant dryer.

Optionally, the compressor is arranged for pressurizing the heat transfer medium such that said heat transfer medium changes from vapour to liquid. The phase change from vapour to liquid of the heat transfer medium can take place in the desiccant dryer or in a heat exchanger.

Optionally, the desiccant dryer comprises at least one heating tube forming part of the heat transfer medium flow circuit and having a second surface for evaporation of the absorbed moisture from the liquid desiccant thereon. The pressure of the liquid desiccant at the first surface can be substantially equal to the pressure of the liquid desiccant at the second surface. The second surface can be an outer surface of the at least one heating tube.

Optionally, the at least one heating tube is arranged such that the liquid desiccant flows, in use, along the outer surface of the at least one heating tube in a falling film. The desiccant dryer can comprise a vertical shell and tube heat exchanger.

Optionally, the at least one heating tube is further arranged such that the heat transfer medium condenses inside the at least one heating tube. The at least one heating tube can be positioned vertically.

Optionally, the heat transfer medium flow circuit further includes a heat exchanger upstream of the desiccant dryer for allowing transfer of heat from the heat transfer medium to the liquid desiccant. The heat exchanger can be positioned downstream of the compressor in the heat transfer medium flow circuit.

Optionally, the desiccant dryer and the condenser are arranged in a common enclosure. The desiccant dryer can be arranged next to the condenser inside the common enclosure. The desiccant dryer can be placed below the condenser in the common enclosure. The condenser can have an access port for evaporated moisture on a top side thereof. The condenser can be placed on top of the desiccant dryer, or vice versa.

Optionally, the desiccant dryer comprises a packed column. The packed column includes a vessel filled with a packing material, as is known in the art. The packed column can have a desiccant spraying section above it.

Optionally, one or more parts of the desiccant dryer are corrosion resistant against the liquid desiccant, or wherein the construction of the desiccant dryer is arranged to withstand the pressure of the heat transfer medium.

The heat transfer medium comprises a refrigerant. Optionally, the heat transfer medium is arranged such that the pressure ratio and suction volume flow rate for the compression of the heat transfer medium are minimized,

Further according to the invention, a method for dehumidifying air according to claim 8 is provided.

The method comprises absorbing moisture from air into a liquid desiccant. The method comprises evaporating the absorbed moisture from the liquid desiccant to evaporated moisture. The method comprises condensing the evaporated moisture, wherein heat released during condensation of the evaporated moisture is absorbed by a heat transfer medium, and wherein said heat is used in evaporation of the absorbed moisture from the liquid desiccant. Thus, the added energy required for demoisturising the liquid desiccant, i.e. evaporating the absorbed moisture from the liquid desiccant, can be minimized.

The method further comprises discharging condensed moisture from the liquid desiccant in liquid form.

The method further comprises compressing the heat transfer medium subsequent to condensing the evaporated moisture.

The heat transfer medium is pressurized such that said heat transfer medium can change from vapour to liquid.

Optionally, the mechanical power used for compressing the heat transfer medium contributes to the heat used for evaporation.

Optionally, the heat transfer medium is compressed such that the pressure and temperature of heat release required for evaporation of the moisture from the liquid desiccant are reached.

Optionally, the absorbed moisture evaporates at a first pressure, and the evaporated moisture condenses at a second pressure, wherein the first pressure is substantially equal to the second pressure.

Optionally, the first pressure differs from the second pressure by less than 50 Pascal.

Optionally, the first pressure and/or the second pressure is subatmospheric.

Optionally, the liquid desiccant flows along an outer surface of at least one tube in a falling film during evaporation of the absorbed moisture from the liquid desiccant, and optionally the heat transfer medium condenses inside the at least one tube.

It will be appreciated that any of the aspects, features and options described in view of the air dehumidification system apply equally to the method for dehumidifying air, and vice versa. It will also be clear that any one or more of the above aspects, features and options can be combined.

### BRIEF DESCRIPTION OF THE DRAWINGS

Embodiments of the present invention will now be described in detail with reference to the accompanying drawings in which:
Figure 1 shows an illustration of a schematic representation of an air dehumidification system;
Figure 2 shows an example of a schematic representation of an air dehumidification system with dryer and condenser in separate enclosures;
Figure 3 shows an example of a schematic representation of an air dehumidification system with integrated dryer and condenser in a common enclosure; and
Figure 4 shows an example of a flow chart of an air dehumidification method;

### DETAILED DESCRIPTION

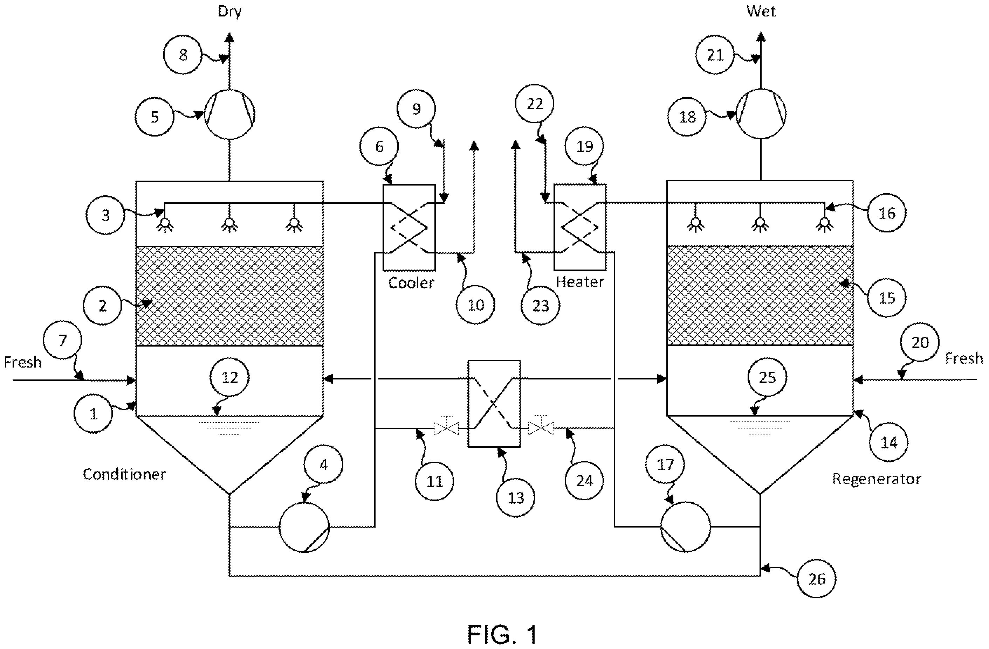

Figure 1 shows an illustration of an air dehumidification system. The air humidification system of Figure 1 has some disadvantages associated therewith which the present invention seeks to alleviate. The system includes a conditioner 1. The conditioner 1 contains a packed column 2 with a liquid desiccant spraying section 3 above it, a liquid pump 4 to circulate the desiccant 12 over the packed column 2, a fresh air supply connection pipe 7 and a discharge fan 5 to remove the dehumidified air 8 from the conditioner 1. The packed column 2 includes a vessel filled with a packing material. In the Figure, the packing material is schematically indicated as a hatched portion. In use, the desiccant 12 will take up moisture from the fresh air 7 inside the packed column 2. The moisture containing liquid desiccant 12 can gather at the bottom of the vessel. The supply temperature of desiccant to the spraying section 3 is controlled by a cooler 6 to a sufficiently low temperature, such that the vapour pressure of the air entering the vessel is greater than that of the desiccant 12 in the packed column 2. The desiccant cooler 6 is for this purpose connected to a cooling circuit 9, 10, which can use cold water or an evaporating refrigerant from a refrigeration system.

The system further includes a regenerator 14. The regenerator 14 contains a packed column 15 with a desiccant spraying section 16 above it, a liquid pump 17 to circulate the desiccant over the packed column, a fresh air supply connection pipe 20 and a discharge fan 18 to remove the wet air 21 from the regenerator 14. In use, the air takes up moisture from the desiccant inside the packed column 15. Hence, in this system, the moisture is removed from the regenerator in vapour form. The supply temperature of desiccant to the spraying section 16 is controlled by a heater 19 to a sufficiently high temperature, such that the vapour pressure of the desiccant is greater than that of the air 20 in the packed column 15. The desiccant heater 19 is for this purpose connected to a heating circuit 22 and 23, which can use hot water or steam, from a hot water system or steam boiler.

After taking up water from the air in the conditioner 1, the diluted desiccant 12 is transferred from the conditioner 1 to the regenerator 14 via a connection line 11 and heat exchanger 13. In a similar fashion, after discharging water inside the regenerator 14, the concentrated desiccant 25 is transferred from the regenerator 14 to the conditioner 1 via a connection line 24 and heat exchanger 13. The function of heat exchanger 13 is to preheat the relatively cold diluted desiccant 12 by the transfer of heat from the relatively warm concentrated desiccant 25. An open communication line 26 guarantees that possible desiccant liquid level differences between the conditioner 1 and the regenerator 14 are equalised.

Although wet desiccant dehumidification processes are generally considered to be relatively energy efficient as compared to traditional chillers applied for this purpose, the energy use of these systems is still significant, for the following reasons. Apart from some electricity for the circulation pump 4 and discharge fan 5, the conditioner 1 requires energy to cool the cooling circuit 9, 10 for sensible cooling of the air stream 7 from the supply temperature of the fresh air to the desired, generally lower injection temperature of the dried air stream 8. Another contribution to the energy use is the latent heat associated with the condensation of vapour from the to be dried air stream 7 to the desiccant 12 which is typically 2400-2500 kJ per kg condensed vapour. Besides this latent heat, also the enthalpy of dilution (typically 100 to 300 kJ/kg dissolved vapour) is transferred to the desiccant. The mentioned contributions to the heat load are to be discharged via the cooler 6 to the cooling circuit 9 and 10.

The moisture absorbed by the desiccant 12 in the conditioner 1, has to be removed again from the desiccant in the regenerator 14. This regeneration process also consumes energy. Apart from some electricity for the circulation pump 17 and discharge fan 18, the regenerator 14 requires thermal energy via the heater 19 from the heating circuit 22, 23 for sensible heating of the air stream 20 and 21 from supply to discharge temperature. Besides this, latent heat associated with the evaporation of the moisture from the desiccant is required, typically 2400-2500 kJ per kg of evaporated vapour. Furthermore, the enthalpy of dissolution (typically 100 to 300 kJ/kg of water extracted from the desiccant) has to be supplied to remove the dissolved moisture from the desiccant. The sum of these mentioned contributions is to be supplied by the heating circuit 22, 23 through the heater 19.

The energy use of wet desiccant dehumidification processes is hence considerable and consists of energy requirements for the discharge of heat from the conditioner 1 to a cooling system 6 and the supply of heat to the regenerator 14 from a heating system 19. More specifically, the latent heat and energy for dilution associated with the absorption of a unit mass of water by the desiccant have to be transferred twice: first via the cooler 6 to the cooling circuit 9, 10 and secondly via the heater 19 from the heating circuit 22, 23. On top of this, there are losses associated with unwanted sensible heat exchange between the desiccant and the airstreams through the packed columns 2, 15 inside respectively the conditioner 1 and in the regenerator 14.

Various attempts have been described in the literature to reduce the energy requirements of wet desiccant dehumidification processes, for example by integrating a heat pump to cool the fresh air stream 7 to the conditioner 1, the energy of which is used to heat the airstream 20 to the regenerator 14. This solution can additionally be combined with a solar collector, to supply solar energy to the heater 19, Another option is to install a so-called twin coil system, which indirectly heats the fresh supply stream 20 to the conditioner 14 by heat from the discharge stream 21. It is also possible to pre-dry the airstream 7 with a traditional chiller with high efficiency, or to partially recirculate exhausted air from the process area to reduce the moisture charge on the desiccant dehumidification system.

The above mentioned solutions have in common that the above mentioned sensible and latent energy requirements remain in place, although to a somewhat lesser extent. Other known disadvantages of known wet desiccant dehumidification processes are carry over of expensive desiccant from the regenerator, entrained with the wet air discharge steam 21; the pollution of the desiccant by substances from. the fresh air 20 to the regenerator 14; the sensitivity of the regeneration process for external climate influences: higher desiccant temperatures and higher air flow rates through the regenerator are necessary in wet climates, when humidity ratios of stream 20 are relatively high, with consequential higher thermal losses from the regenerator 14 and higher energy demands of heater 19; and the requirement of floor space at a location outside the building, to guarantee free air supply and discharge to and from the regenerator. For certain climates, the outdoor installation requires measures for frost protection of the regenerator.

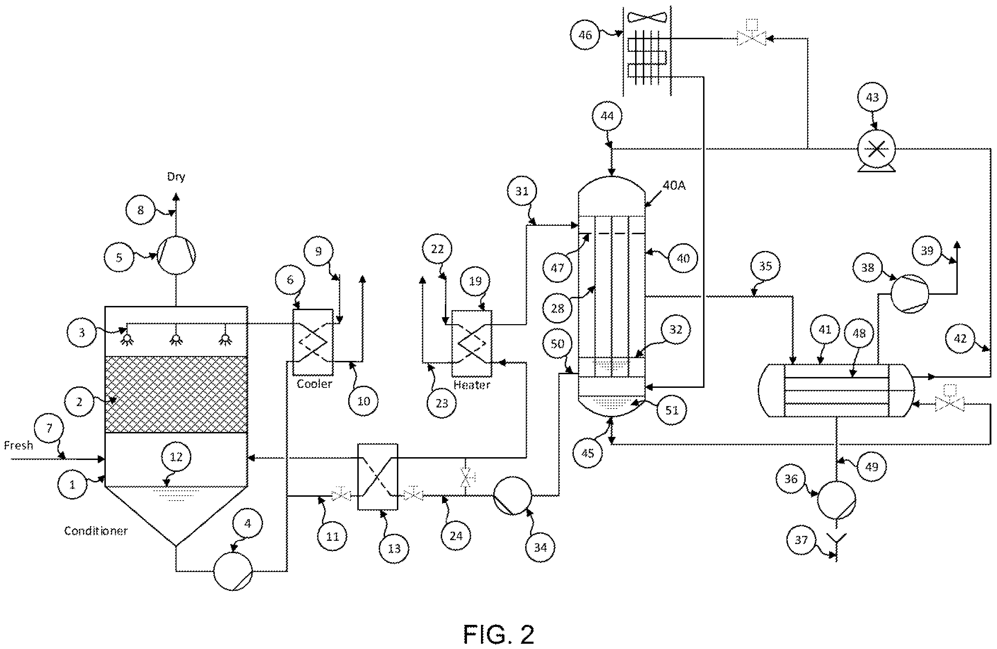

Figure 2 shows an example of a diagram of an air dehumidification system according to the present invention. In this example, the air dehumidification system includes a dryer and a condenser. Here, the dryer and condenser are provided in separate enclosures. The to be demoisturised desiccant is supplied at 31 to a desiccant dryer 40 which comprises a shell 40A with internally heated tubes 28. The desiccant is demoisturised inside the shell space of the desiccant dryer 40 at a certain, in this example subatmospherical, pressure, whereby the formed water vapour (i.e. moisture) is discharged via a connection pipe 35 to a condenser 41. The moisture subsequently condenses at virtually the same, in this example subatmospherical, pressure on the outside of the internally cooled tubes 48 inside the shell of the condenser 41. A pressure difference between the vapour in the dryer 40 and in the condenser 41 is preferably less than 50 Pascal. In this example, the pressure difference is 10-20 Pascal. The formed condensate is discharged from a condensate outlet 49. Here, a condensate pump 36 pressurises the condensate from the subatmospherical pressure to atmospherical pressure. The condensate (i.e. liquid water) is discharged via a condensate drain 37. Thus, in this example the moisture is discharged in liquid form.

The latent heat from the condensation of the moisture at the outside of the tubes 48 is discharged by the phase change of a refrigerant liquid 51 to a refrigerant vapour 42. The pressure at which this phase change takes place is typically significantly higher than the subatmospherical pressure at which the moisture was evaporated from the desiccant in the dryer 40 and condenser 41.

The refrigerant vapour is transported to a refrigerant compressor 43 and is pressurized by this compressor 43 to a sufficiently high pressure, such that a second phase change of the refrigerant, from vapour to liquid, can take place inside the tubes 28 of the dryer 40 at a sufficiently high temperature level to achieve adequate drying of the liquid desiccant at the outer surface of the tubes 28.

Optionally, the tubes 28 inside the dryer 40 can be positioned in an upright position and mounted between two horizontal sheets, one at a lower end and one at an upper end of the tubes. In that configuration, the liquid desiccant can flow downwards in a thin film along the outer surface of these tubes 28, permitting high heat transfer between the tube wall and the falling film of desiccant liquid. The falling film can be established by means of a horizontal plate 47 mounted underneath the desiccant inlet connection 31 and close to the upper end of the vertical tubes 28. The plate 47 can be provided with holes centered around each tube, with a hole diameter slightly larger than the outer diameter of the tubes 28, establishing a small gap around each of the tubes 28 for the passage of the desiccant, initiating development of the falling film. The dried desiccant can be collected on top of the lower tube sheet 32, from where it is discharged via an desiccant outlet 50 to the desiccant pump 34 and returned to the conditioner 1.

Optionally, the condensed refrigerant liquid 51 might be collected in the space in the shell of the desiccant dryer 40 underneath the lower tube sheet 32, just above the refrigerant outlet 45.

The to be dried desiccant 11 from the conditioner in this example is preheated in a heat exchanger 13 in counterflow with the dried desiccant 24 from the dryer 40.

Optionally, an additional heater 19 might be incorporated in the desiccant supply line to the desiccant dryer 40, for example for initial start-up of the evaporation process or for other control purposes, indirectly heating the desiccant by heat from a hot water or steam circuit 22, 23.

Optionally, a condenser 46 can be incorporated in the refrigerant circuit, to discharge excess heat from this circuit, for cases in which the available condensation heat from the refrigerant phase change from 44 to 45 would exceed heat demand of the desiccant dryer 40.

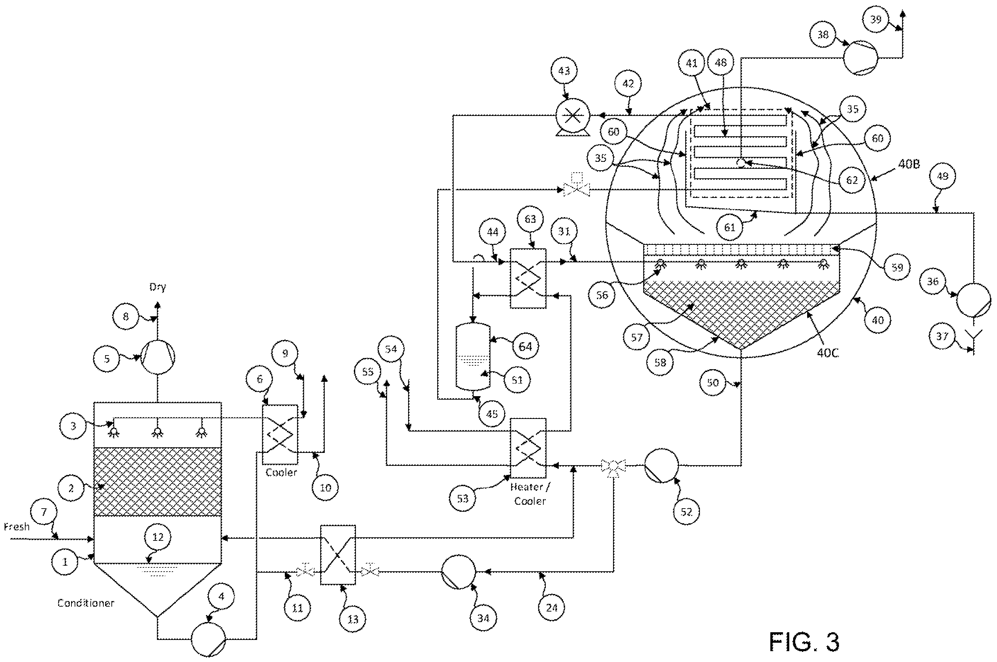

The desiccant dryer 40 has pipes 28 and a shell 40A that have to be fabricated from a material that is resistant to the corrosive properties of generally applied desiccants. The pipes have to be able to withstand high pressures from the refrigerant. Applicable construction materials for the dryer that meet these demands, such as titanium, are known to be rare and expensive. Therefore, a further possible embodiment of the invention is proposed, with essentially the same working principle as that of the embodiment of Figure 2, but alleviating the mentioned disadvantage. This alternative embodiment is shown in Figure 3.

Figure 3 shows an example of a diagram of an air dehumidification system with integrated dryer 40 and condenser 41 in a common enclosure. The embodiment according to Figure 3 contains several items with similar names and functions as in the embodiment of Figure 2. These similar items are indicated by the same reference numerals. The explanation of the working principle of the embodiment according to Figure 3 is limited to the differences with Figure 2 for conciseness. In the embodiment of Figure 3, the dryer 40 and condenser 41 are unified into a common enclosure 40B, for example being a cylindrically formed shell with closed ends. Figure 3 shows in this example a cross-sectional view of this shell 40B of a plane directed perpendicularly to the length axis of the shell.

The to be dried desiccant is supplied to the dryer at 31 and subsequently distributed for example by means of sprayers 56 over a corrosion resistant packed column 57 on the surface of which the drying process takes place. The packed column is encapsulated at the sides and bottom by a corrosion resistant holder 40C, for example fabricated from a kind of relatively cheap plastic material. At the top side of this holder, hence at the vapour outlet, a corrosion resistant demister 59 is provided to avoid any possible carry over of desiccant. All items in contact with the desiccant 56, 57, 58 and 59 and even the supply and discharge connections 31 and 50 can preferably be fabricated from a corrosion resistant plastic material, because the strength of most commonly applied plastics is sufficient for the application according to this embodiment.

The water vapour from the demister 59 flows freely, at a low velocity, e.g. a velocity of less than 5 m/s, with negligible pressure losses and via various flow paths 35 to the vapour condenser 41 which is situated in the upper part of the shell 40B of the dryer/condenser. This vapour condenser 41 comprises a bundle of multiple internally cooled tubes 48. Preferably the refrigerant flowing through the tubes 48 evaporates inside the tubes 48. The external surfaces of these tubes are, during the condensation process, only exposed to clean water vapour. The tubes 48 therefore have to withstand the internal pressure of the refrigerant 42, but do not have to be fabricated from highly corrosion resistant materials. Commonly applied materials for refrigeration tube bundles such as steel, copper or stainless steel are therefore applicable for this item 48 in this embodiment.

The refrigerant vapour is transported from the tubes 48 to the refrigerant compressor 43 and is pressurized by this compressor 43 to a sufficiently high pressure, such that a second phase change of the refrigerant, from vapour to liquid, can take place inside a heat exchanger 63. The heat exchanger 63 pre-heats the wet desiccant before distribution over the packed column to promote moisture evaporation in the dryer 40. Thus, heat removed from the evaporated moisture during condensation in the condenser is absorbed by the heat transfer medium, and said heat is used in evaporation of the absorbed moisture from the liquid desiccant. After condensation of the refrigerant in the heat exchanger 63 the condensed refrigerant 51 is collected in a receiver vessel 64, ready to be fed to the tubes 48 again. The internal space of the condenser 41 is preferably only accessible for the water vapour 35 from the upper side, to guarantee a downwardly directed flow direction of the vapour inside the condenser 41. The flow of vapour in the condenser can then be in counter current with the here mainly upwardly directed flow direction of the evaporating refrigerant inside the tubes 48. The vapour access from above can be accomplished by closed encapsulations at the sides 60 and bottom 61 of the condenser 41. The formed condensate is in this example collected on an inclined bottom plate 61 underneath the tube bundle 48 and is discharged via a condensate outlet pipe 49. A condensate pump 36 can pressurise the condensate from the subatmospherical pressure to atmospherical pressure. The liquid condensate is discharged via condensate drain 37.

Non-condensable gases can be discharged to the atmosphere via a perforated pipe 62 located near the center of the tube bundle 48. A vacuum pump 38 can connect the pipe 62 to a discharge pipe 39.

The dried desiccant is discharged from the drying system 40 via an outlet connection 50 and is supplied to a circulation pump 52. A part of the desiccant 24 is returned to the conditioner. In this example, another part passes a heater/cooler 53. This heater/cooler 53 indirectly provides extra heat to the desiccant circuit if the supply temperature of the to be dried desiccant to the dryer 40 is too low and cools the to be dried desiccant if this temperature is too high. This temperature stabilisation process can be carried out by changing the temperature of a secondary circuit 54, 55 accordingly. The thermal capacity of this lieater/cooler 53 is evidently preferably minimal and only to be used for start-up of a cold system or for small temperature corrections during operation. The main heat source of the system, for evaporation and dissolution of the moisture is in this example namely provided by the condenser 63, by the condensation of refrigerant 44.

An objective of the system according to the present invention is to provide an energy efficient solution for the removal of absorbed moisture from a desiccant. This can be achieved by reclaiming the latent heat released from the moisture condensation inside the condenser, and by the transfer of this latent heat to an evaporating refrigerant liquid. The enthalpy of this refrigerant can further be increased by mechanical energy transfer from the compressor to the refrigerant, to a level which is high enough to provide the latent heat for moisture evaporation and dissolution enthalpy necessary to evaporate and separate the moisture from the desiccant inside the dryer. In other words: the energy for the evaporation process of moisture from the desiccant and for the dissolution of this moisture are supplied from a secondary circuit which receives energy by the condensation of the evaporated moisture and from a mechanical compressor. This method of re-use of energy makes the process highly energy efficient.

Another objective of the invention is to accomplish this goal by means of generally available, standard components against relatively low cost. This is achieved by selecting a refrigerant with optimal physical properties, aiming at a compressor with relatively small pressure ratio and small suction volume flow rate. This can for example be achieved using refrigerant R1234ze, with a pressure ratio of typically 3 to 5 and a specific volume of the suction vapour in the range of 0.5 to 1 m³ suction volume of the compressor per kg removed water from the desiccant. These requirements for the compressor are more easily attainable with commonly available equipment than the requirements for known mechanical water vapour compression systems.

The typically large evaporation area of the packed column, the placement of a demister above, upwards velocities of the vapour well below 5 m/s and the typically low prevailing pressures inside the enclosure, e.g. less than 100 mbar, provide that unwanted carry over of expensive desiccant, from the to be dried moisture towards the condensate drain is not expected to occur.

Furthermore, the thermal performance is independent of external climate conditions, for example because the desiccant drying process according to the present invention does not require any fresh air from outside for the discharge of moisture. The system according to the present invention is therefore suitable for indoor installation and does in that case additionally not require any frost protection measures.

The vertical configuration of Figure 2 as well as the alternative embodiment of Figure 3 with integrated dryer and condenser in a common enclosure require minimal, e.g. less than 10 m², floor space, which is another advantage of the present invention.

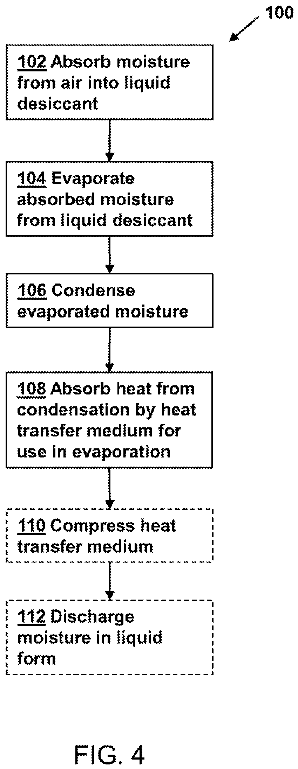

Figure 4 shows an example of an air dehumidification method 100. Thereto, in a first step 102 moisture is absorbed from air into a liquid desiccant. The absorbed moisture is evaporated from the liquid desiccant to evaporated moisture in step 104. The evaporated moisture is condensed in step 106, wherein heat released during condensation of the evaporated moisture is absorbed in step 108 by a heat transfer medium, and wherein said heat is used in the evaporation of the absorbed moisture from the liquid desiccant. The step 108 can be performed after step 106, or in parallel with step 106. Heat for evaporating the moisture from the desiccant in step 106 can be provided by condensation of the heat transfer medium. Heat released during condensation of the evaporated moisture can be used for evaporation of the heat transfer medium in step 108. In this example, the heat transfer medium is compressed In step 110 after condensing in step 106 the evaporated moisture. The condensed moisture is discharged in step 112 from the liquid desiccant in liquid form. Discharging step 112 can be performed before steps 108 and/or 110, after steps 108 and/or 110, or in parallel with steps 108 and/or 110.

Herein, the invention is described with reference to specific examples of embodiments of the invention. It will, however, be evident that various modifications and changes may be made therein, without departing from the scope of the invention which is defined by the appending claims.

## Claims

1. An air dehumidification system, comprising:
- a conditioner (1) for absorbing moisture from air into a liquid desiccant (12);
- a desiccant dryer (40) for evaporating the absorbed moisture from the liquid desiccant (12) to evaporated moisture;
- a condenser (41) for condensing the evaporated moisture; **characterized in that** the system furthermore comprises:
- a heat transfer medium flow circuit arranged such that heat removed from the evaporated moisture during condensation in the condenser (41) is absorbed by the heat transfer medium, and such that said heat is used in evaporation of the absorbed moisture from the liquid desiccant, the heat transfer medium comprising a refrigerant;
wherein the condenser (41) comprises at least one cooling tube (48) forming part of the heat transfer medium flow circuit and having a first surface for condensation of the evaporated moisture thereon,
wherein the heat transfer medium flow circuit comprises a compressor (43) downstream of the at least one cooling tube (48).

2. The air dehumidification system according to claim 1, wherein the condenser (41) is arranged for discharging condensed moisture in liquid form, the condensed moisture in particular being water, wherein the system preferably includes a condensate drain (37) for discharging the liquid.

3. The air dehumidification system according to any of the preceding claims, wherein the desiccant dryer (40) comprises at least one heating tube (28) forming part of the heat transfer medium flow circuit and having a second surface for evaporation of the absorbed moisture from the liquid desiccant (12) thereon, wherein the condenser (41) preferably comprises a bundle of tubes (48), wherein the system is preferably arranged such that the heat transfer medium condenses inside the at least one heating tube (28).

4. The air dehumidification system according to any of the preceding claims, wherein the heat transfer medium flow circuit further includes a heat exchanger (63) for allowing transfer of heat from the heat transfer medium to the liquid desiccant (12) upstream of the desiccant dryer (40).

5. The air dehumidification system according to any of the preceding claims, including:
- an additional heater incorporated (19) in the desiccant supply line to the desiccant dryer (40); and/or
- a heat exchanger (13) in counterflow with the dried desiccant from the dryer (40), for preheating desiccant to be dried.

6. The air dehumidification system according to any of the preceding claims, wherein the desiccant dryer (40) and the condenser (41) are arranged in a common enclosure, wherein the desiccant dryer is preferably placed below the condenser, wherein preferably the condenser (41) has an access port for evaporated moisture on a top side thereof.

7. The air dehumidification system according to any one of the preceding claims, wherein the desiccant dryer comprises a packed column.

8. A method for dehumidifying air, the method comprising:
- absorbing moisture from air into a liquid desiccant (12);
- evaporating the absorbed moisture from the liquid desiccant (12) to evaporated moisture; and
- condensing the evaporated moisture;
wherein heat released during condensation of the evaporated moisture is absorbed by a heat transfer medium (44), the heat transfer medium (44) comprising a refrigerant, and wherein said heat is used in evaporation of the absorbed moisture from the liquid desiccant, the method further comprising compressing the heat transfer medium (44) subsequent to condensing the evaporated moisture, wherein the heat transfer medium (44) is pressurized such that said heat transfer medium can change from vapour (42) to liquid (51),
the method preferably comprising discharging condensed moisture from the liquid desiccant (12) in liquid form.

9. The method according to claim 8, further comprising compressing the heat transfer medium (44) subsequent to condensing the evaporated moisture.

10. The method according to claim 9, wherein the heat transfer medium (44) is pressurized such that said heat transfer medium can change from vapour to liquid.

11. The method according to claim 9 or 10, wherein the mechanical power used for compressing the heat transfer medium (44) contributes to the heat used for evaporation.

12. The method according to any of claims 9, 10 or 11, wherein the heat transfer medium (44) is compressed such that the pressure and temperature of heat release required for evaporation of the moisture from the liquid desiccant (12) are reached.

13. The method according to any of claims 8-12, wherein the absorbed moisture evaporates at a first pressure, and the evaporated moisture condenses at a second pressure, wherein the first pressure is substantially equal to the second pressure, wherein wherein the first pressure preferably differs from the second pressure by less than 50 Pascal.

14. The method according to any of claims 8-13, wherein the first pressure and/or the second pressure is subatmospheric.

15. The method according to any of claims 8-14, wherein the liquid desiccant (12) flows along an outer surface of at least one tube (28) in a falling film during evaporation of the absorbed moisture from the liquid desiccant, and optionally wherein the heat transfer medium condenses inside the at least one tube (28).

## Patentansprüche

1. Luftentfeuchtungssystem, umfassend:
- einen Konditionierer (1) zum Absorbieren von Feuchtigkeit aus der Luft in ein flüssiges Trockenmittel (12);
- einen Trockenmitteltrockner (40) zum Verdampfen der absorbierten Feuchtigkeit aus dem flüssigen Trockenmittel (12) in verdampfte Feuchtigkeit;
- einen Kondensator (41) zum Kondensieren der verdampften Feuchtigkeit;
**dadurch gekennzeichnet, dass** das System ferner umfasst:
- einen Wärmeübertragungsmediumströmungskreislauf, so angeordnet, dass während der Kondensation im Kondensator (41) aus der verdampften Feuchtigkeit entfernte Wärme vom Wärmeübertragungsmedium absorbiert wird, und so, dass diese Wärme bei der Verdampfung der absorbierten Feuchtigkeit aus dem flüssigen Trockenmittel verwendet wird, wobei das Wärmeübertragungsmedium ein Kältemittel umfasst;
wobei der Kondensator (41) mindestens ein Kühlrohr (48) umfasst, einen Teil des Wärmeübertragungsmediumströmungskreislaufs bildend und eine erste Oberfläche zur Kondensation der verdampften Feuchtigkeit darauf aufweisend,
wobei der Wärmeübertragungsmediumströmungskreislauf einen dem mindestens einen Kühlrohr (48) nachgelagerten Kompressor (43) umfasst.

2. Luftentfeuchtungssystem nach Anspruch 1, wobei der Kondensator (41) zum Abführen von kondensierter Feuchtigkeit in flüssiger Form angeordnet ist, wobei die kondensierte Feuchtigkeit insbesondere Wasser ist, wobei das System vorzugsweise einen Kondensatablauf (37) zum Abführen der Flüssigkeit umfasst.

3. Luftentfeuchtungssystem nach einem der vorstehenden Ansprüche, wobei der Trockenmitteltrockner (40) mindestens ein Heizrohr (28) umfasst, einen Teil des Wärmeübertragungsmediumströmungskreislaufs bildend und eine zweite Oberfläche zum Verdampfen der absorbierten Feuchtigkeit aus dem flüssigen Trockenmittel (12) darauf aufweisend, wobei der Kondensator (41) vorzugsweise ein Bündel von Rohren (48) umfasst, wobei das System vorzugsweise so angeordnet ist, dass das Wärmeübertragungsmedium innerhalb des mindestens einen Heizrohrs (28) kondensiert.

4. Luftentfeuchtungssystem nach einem der vorstehenden Ansprüche, wobei der Wärmeübertragungsmediumströmungskreislauf ferner einen Wärmetauscher (63) umfasst, um eine Übertragung von Wärme vom Wärmeübertragungsmedium auf das flüssige Trockenmittel (12), dem Trockenmitteltrockner (40) vorgelagert, zu erlauben.

5. Luftentfeuchtungssystem nach einem der vorstehenden Ansprüche, umfassend:
- eine zusätzliche Heizung, integriert (19) in die Trockenmittelversorgungsleitung zum Trockenmitteltrockner (40); und/oder
- einen Wärmetauscher (13) im Gegenstrom zu dem getrockneten Trockenmittel aus dem Trockner (40), zum Vorwärmen des zu trocknenden Trockenmittels.

6. Luftentfeuchtungssystem nach einem der vorstehenden Ansprüche, wobei der Trockenmitteltrockner (40) und der Kondensator (41) in einem gemeinsamen Gehäuse angeordnet sind, wobei der Trockenmitteltrockner vorzugsweise unterhalb des Kondensators platziert ist, wobei der Kondensator (41) vorzugsweise einen Zugangsanschluss für verdampfte Feuchtigkeit auf einer Oberseite davon aufweist.

7. Luftentfeuchtungssystem nach einem der vorstehenden Ansprüche, wobei der Trockenmitteltrockner eine komprimierte Säule umfasst.

8. Verfahren zum Entfeuchten von Luft, wobei das Verfahren umfasst:
- Absorbieren von Feuchtigkeit aus der Luft in ein flüssiges Trockenmittel (12);
- Verdampfen der absorbierten Feuchtigkeit aus dem flüssigen Trockenmittel (12) in verdampfte Feuchtigkeit; und
- Kondensieren der verdampften Feuchtigkeit;
wobei während Kondensation der verdampften Feuchtigkeit freigesetzte Wärme von einem Wärmeübertragungsmedium (44) absorbiert wird, wobei das Wärmeübertragungsmedium (44) ein Kältemittel umfasst, und wobei die Wärme bei der Verdampfung der absorbierten Feuchtigkeit aus dem flüssigen Trockenmittel verwendet wird, wobei das Verfahren ferner das Verdichten des Wärmeübertragungsmediums (44) nach dem Kondensieren der verdampften Feuchtigkeit umfasst, wobei das Wärmeübertragungsmedium (44) so mit Druck beaufschlagt wird, dass das Wärmeübertragungsmedium von Dampf (42) zu Flüssigkeit (51) wechseln kann,
wobei das Verfahren vorzugsweise das Ableiten kondensierter Feuchtigkeit aus dem flüssigen Trockenmittel (12) in flüssiger Form umfasst.

9. Verfahren nach Anspruch 8, ferner umfassend das Verdichten des Wärmeübertragungsmediums (44) nach dem Kondensieren der verdampften Feuchtigkeit.

10. Verfahren nach Anspruch 9, wobei das
Wärmeübertragungsmedium (44) so mit Druck beaufschlagt wird, dass das Wärmeübertragungsmedium von Dampf zu Flüssigkeit wechseln kann.

11. Verfahren nach Anspruch 9 oder 10, wobei die zum Verdichten des Wärmeübertragungsmediums (44) verwendete mechanische Leistung zu der zur Verdampfung verwendeten Wärme beiträgt.

12. Verfahren nach einem der Ansprüche 9, 10 oder 11, wobei das Wärmeübertragungsmedium (44) so verdichtet wird, dass der Druck und die Temperatur der Wärmefreisetzung, die für die Verdampfung der Feuchtigkeit aus dem flüssigen Trockenmittel (12) erforderlich sind, erreicht werden.

13. Verfahren nach einem der Ansprüche 8 bis 12, wobei die absorbierte Feuchtigkeit bei einem ersten Druck verdampft und die verdampfte Feuchtigkeit bei einem zweiten Druck kondensiert, wobei der erste Druck im Wesentlichen gleich dem zweiten Druck ist, wobei sich der erste Druck vorzugsweise um weniger als 50 Pascal von dem zweiten Druck unterscheidet.

14. Verfahren nach einem der Ansprüche 8 bis 13, wobei der erste Druck und/oder der zweite Druck subatmosphärisch ist.

15. Verfahren nach einem der Ansprüche 8 bis 14, wobei das flüssige Trockenmittel (12) während der Verdampfung der absorbierten Feuchtigkeit aus dem flüssigen Trockenmittel entlang einer Außenfläche des mindestens einen Rohrs (28) in einem Fallstrom fließt, und wobei das Wärmeübertragungsmedium optional innerhalb des mindestens einen Rohrs (28) kondensiert.

## Revendications

1. Système de déshumidification d'air, comprenant :
- un conditionneur (1) pour absorber l'humidité de l'air dans un déshydratant liquide (12) ;
- un séchoir à déshydratant (40) pour évaporer l'humidité absorbée à partir du déshydratant liquide (12) en humidité évaporée ;
- un condenseur (41) pour condenser l'humidité évaporée ;
**caractérisé en ce que** le système comprend en outre :
- un circuit d'écoulement de milieu de transfert de chaleur agencé de telle sorte que de la chaleur retirée de l'humidité évaporée pendant la condensation dans le condenseur (41) est absorbée par le milieu de transfert de chaleur, et de telle sorte que ladite chaleur est utilisée lors de l'évaporation de l'humidité absorbée à partir du déshydratant liquide, le milieu de transfert de chaleur comprenant un fluide frigorigène ;
dans lequel le condenseur (41) comprend au moins un tube de refroidissement (48) faisant partie du circuit d'écoulement de milieu de transfert de chaleur et présentant une première surface pour la condensation de l'humidité évaporée sur celui-ci,
dans lequel le circuit d'écoulement de milieu de transfert de chaleur comprend un compresseur (43) en aval du au moins un tube de refroidissement (48).

2. Système de déshumidification d'air selon la revendication 1, dans lequel le condenseur (41) est agencé pour évacuer l'humidité condensée sous forme liquide, l'humidité condensée étant en particulier de l'eau, dans lequel le système inclut de préférence une évacuation de condensat (37) pour évacuer le liquide.

3. Système de déshumidification d'air selon l'une des quelconques revendications précédentes, dans lequel le séchoir à déshydratant (40) comprend au moins un tube de chauffage (28) faisant partie du circuit d'écoulement de milieu de transfert de chaleur et présentant une seconde surface pour l'évaporation de l'humidité absorbée à partir du déshydratant liquide (12) sur celui-ci, dans lequel le condenseur (41) comprend de préférence un faisceau de tubes (48), dans lequel le système est de préférence agencé de telle sorte que le milieu de transfert de chaleur se condense à l'intérieur du au moins un tube de chauffage (28).

4. Système de déshumidification d'air selon l'une des quelconques des revendications précédentes, dans lequel le circuit d'écoulement de milieu de transfert de chaleur inclut en outre un échangeur de chaleur (63) pour permettre un transfert de chaleur depuis le milieu de transfert de chaleur vers le déshydratant liquide (12) en amont du séchoir à déshydratant (40).

5. Système de déshumidification d'air selon l'une des quelconques revendications précédentes, incluant :
- un dispositif de chauffage supplémentaire (19) incorporé dans la ligne d'alimentation de déshydratant vers le séchoir à déshydratant (40) ; et/ou
- un échangeur de chaleur (13) à contre-courant avec le déshydratant séché provenant du séchoir (40), pour préchauffer le déshydratant à sécher.

6. Système de déshumidification d'air selon l'une des quelconques revendications précédentes, dans lequel le séchoir à déshydratant (40) et le condenseur (41) sont agencés dans une enceinte commune, dans lequel le séchoir à déshydratant est de préférence placé en dessous du condenseur, dans lequel de préférence le condenseur (41) présente un orifice d'accès pour l'humidité évaporée sur un côté supérieur de celui-ci.

7. Système de déshumidification d'air selon l'une des quelconques revendications précédentes, dans lequel le séchoir à déshydratant comprend une colonne garnie.

8. Procédé de déshumidification d'air, le procédé comprenant les étapes consistant à :
- absorber l'humidité de l'air dans un déshydratant liquide (12) ;
- évaporer l'humidité absorbée à partir du déshydratant liquide (12) en humidité évaporée ; et
- condenser l'humidité évaporée ;
dans lequel la chaleur libérée pendant la condensation de l'humidité évaporée est absorbée par un milieu de transfert de chaleur (44), le milieu de transfert de chaleur (44) comprenant un fluide frigorigène, et dans lequel ladite chaleur est utilisée dans l'évaporation de l'humidité absorbée à partir du déshydratant liquide, le procédé comprenant en outre une compression du milieu de transfert de chaleur (44) après la condensation de l'humidité évaporée, dans lequel le milieu de transfert de chaleur (44) est pressurisé de telle sorte que ledit milieu de transfert de chaleur peut passer de la vapeur (42) au liquide (51),
le procédé comprenant de préférence une évacuation de l'humidité condensée à partir du déshydratant liquide (12) sous forme liquide.

9. Procédé selon la revendication 8, comprenant en outre une compression du milieu de transfert de chaleur (44) après la condensation de l'humidité évaporée.

10. Procédé selon la revendication 9, dans lequel le milieu de transfert de chaleur (44) est pressurisé de telle sorte que ledit milieu de transfert de chaleur peut passer de la vapeur au liquide.

11. Procédé selon la revendication 9 ou 10, dans lequel la puissance mécanique utilisée pour comprimer le milieu de transfert de chaleur (44) contribue à la chaleur utilisée pour l'évaporation.

12. Procédé selon l'une des quelconques revendications 9, 10 ou 11, dans lequel le milieu de transfert de chaleur (44) est comprimé de telle sorte que la pression et la température de libération de chaleur requises pour l'évaporation de l'humidité à partir du déshydratant liquide (12) sont atteintes.

13. Procédé selon l'une des quelconques revendications 8 à 12, dans lequel l'humidité absorbée s'évapore à une première pression, et l'humidité évaporée se condense à une seconde pression, dans lequel la première pression est sensiblement égale à la seconde pression, dans lequel la première pression diffère de préférence de la seconde pression de moins de 50 Pascals.

14. Procédé selon l'une des quelconques revendications 8 à 13, dans lequel la première pression et/ou la seconde pression est sous-atmosphérique.

15. Procédé selon l'une des quelconques revendications 8 à 14, dans lequel le déshydratant liquide (12) s'écoule le long d'une surface extérieure d'au moins un tube (28) en un film tombant pendant l'évaporation de l'humidité absorbée à partir du déshydratant liquide, et facultativement dans lequel le milieu de transfert de chaleur se condense à l'intérieur du au moins un tube (28).
